# EUROPÄISCHE PATENTSCHRIFT

(11) **EP 0 381 665 B1**
(45) Veröffentlichungstag und Bekanntmachung des Hinweises auf die Patenterteilung: **24.11.1993**
(21) Anmeldenummer: 90890023.6
(22) Anmeldetag: 02.02.1990
(51) Int. Cl.: E02D 29/10, F16L 1/036

(54) **Verfahren und Einrichtung zum Herstellen eines Stranges aus Einzelelementen unter Wasser**
Process and apparatus for forming a strand of single elements under water
Procédé et dispositif pour constituer une chaîne d'éléments unitaires sous l'eau

(30) Priorität: 02.02.1989 AT 218/89
(43) Veröffentlichungstag der Anmeldung: 08.08.1990
(73) Patentinhaber: Öko Wien Umweltschutzprojektentwicklungs- und managementgesellschaft m.b.H., 1040 Wien (AT)
(72) Erfinder: Kadrnoska, Helmut, Dipl.-Ing., A-1220 Wien (AT); Kowaschitz, Josef, Ing., A-1020 Wien (AT)
(74) Vertreter: Casati, Wilhelm, Dipl.-Ing.

(56) Entgegenhaltungen:
- DE-A- 2 610 079
- DE-A- 3 204 410
- NL-A- 7 114 665

## Beschreibung

Die Erfindung betrifft ein Verfahren zum Herstellen eines Stranges aus Einzelelementen, z.B. Rohrschüssen in einem Graben, beispielsweise einer Künette, unter Wasser, durch Absenken der Einzelelemente und Verbinden des jeweils zuletzt abgesenkten Einzelelementes mit dem zuvor abgesenkten Einzelelement, z.B. durch Einschieben oder Aufschieben der beiden Einzelelemente in- oder aufeinander und gegebenenfalls Hinterfüllen des Stranges mit Beton, und eine Einrichtung zur Durchführung dieses Verfahrens. Das Verlegen von Rohren in Gräben kann dadurch erfolgen, daß während der Bauarbeiten der Graben wasserfrei gehalten wird. Hiezu kann der Grundwasserspiegel abgesenkt werden oder aber der Graben durch Abpumpen von Wasser ständig wasserfrei gehalten werden. Beide Maßnahmen beeinflussen dabei den Grundwasserspiegel; dies kann zum Versiegen von Brunnen oder von Rissen in Gebäuden in der Umgebung der Gräben durch Bodenabsenkungen führen. Der gesunkene Grundwasserspiegel kann sogar in ländlichen Gebieten zur Beeinträchtigung der Ernte Anlaß geben.

Es wurde auch schon bekannt, den Graben mit einem wasserdichten Verbau auszukleiden. Um ein Eindringen des Grundwassers durch die Grabensohle zu verhindern, ist dabei jedoch ein beträchtlich über die Grabentiefe hinausgehender Verbau oder ein Abdichten der Grabensohle selbst erforderlich. Diese Vorgangsweise ist äußerst kostspielig.

Durch die DE-OS 32 044 10 (vgl. Oberbegriff des Anspruchs 1) wurde nun bereits ein Verfahren bekannt, das es erlaubt, die Einzelelemente unter Wasser zu verlegen. Hiebei werden die vorgefertigten Elemente in die mit Wasser gefüllten Künetten durch Aufhängeelemente bis unter die Wasseroberfläche abgesenkt und von außerhalb ausgerichtet, miteinander verbunden und mit einer Ummantelung versehen, die sie im Graben fixiert. Das Ausrichten der einzelnen Elemente von außerhalb der Gräben bereitet jedoch Schwierigkeiten. Zu diesem Zweck sind dem Aufhängeelement für die Rohre außerhalb des Grabens abgestützte Ausrichtelemente beigeordnet. Jedes Ausrichtelement greift dabei im Abstand von dem Aufhängeelement am Rohrabschnitt an und ist zum vertikalen und/oder horizontalen Ausrichten des Rohrabschnittes eingerichtet. Die Ausrichtelemente sind dabei auf einem Schlitten angeordnet, der auf Schienen läuft, die längs den Seitenrändern der Künette angeordnet sind. Die Einzelelemente können bei der bekannten Anordnung nur in sehr begrenztem Umfang in Längsrichtung des Stranges bewegt werden, da für eine solche Bewegung jeweils nur der Raum zwischen zwei benachbarten Aussteifungen des Grabens bzw. der Künette zur Verfügung steht. Die Seile, an welchen die Elemente hängen, kreuzen die Aussteifungen, sodaß die Seile über diese Aussteifungen nicht hinwegbewegt werden können, was die vorerwähnte Beschränkung der Bewegung der Einzelelemente in Richtung des Stranges verhindert. Vor allem bei schweren Fertigteilen ist die bekannte Vorgangsweise unwirtschaftlich, da die Einzelteile je nach Baufortschritt einzeln mittels Mobilkran versetzt werden müssen. Außerdem müssen die Aussteifungen des Grabens bzw. der Künette vereinzelt ausgewechselt, d.h. umgepölzt werden.

Es wurde auch schon bekannt (AT-PS 102 012), Unterwasserrohrleitungen aus gelenkig miteinander verbundenen Teilen dadurch herzustellen, daß diese Teile aus mit Hilfe der Auftriebswirkung des Wassers gewichtslos oder nahezu gewichtslos gemachten, einzeln abgesenkten und durch Taucher zugfest zu einer frei durchhängenden Leitung verbundenen Rohrstücken hergestellt werden, sodaß die Leitungskurve zwischen dem festen Anfangs- oder Endpunkt durch entsprechende Bemessung der relativen Gewichte der Rohrstücke bestimmt werden kann. Der Einsatz von Tauchern ist problematisch und insbesondere in engen Gräben nicht durchzuführen.

Durch die AT-PS 85717 wurde ein Verfahren zur Herstellung von Unterwassertunneln bekannt, bei dem jedoch das Grundwasser abgesenkt werden muß. Bei diesem Verfahren werden zunächst in der Längsrichtung des geplanten Tunnels in den Untergrund des Gewässers seitliche Abschlußwände eingetrieben. Hernach wird das Erdreich in der Gewässersohle in dem notwendigen Umfang ausgehoben und auf die seitlichen Wände eine wasserdichte Decke aufgelagert. Danach erfolgt das Absenken des Grundwassers, sodaß die Erde, die sich zwischen der Decke und den seitlichen Wänden befindet, abgetragen werden kann. In den nach dem Abtragen vorhandenen Hohlraum kann dann der Tunnelkörper eingebracht werden.

Durch die DE-OS 21 15 209 wurde ein Verfahren bekannt, nach welchem ein Senkkasten oder ein Tunnelelement unter Wasser fundiert werden kann. Dabei wird so vorgegangen, daß das Bauelement auf eine vorläufige Abstützung eingestellt werden wird und der Raum unterhalb des Bauelementes mit einem Fundierungsmaterial aufgefüllt wird. Bei diesem Verfahren muß jedes einzelne Element gesondert ausgerichtet werden, wodurch das gesamte Verfahren verkompliziert wird.

Durch die DE-AS 12 14 617 wurde ein Verfahren zum Versenken einer in leerem Zustand schwimmfähigen Rohrleitung, vor allem eines Dükers, im Wasser bekannt. Der Hohlraum der Rohrleitung wird hiebei durch Einlegen von Füllkörpern mit geringem spezifischen Gewicht, die in ihrer Lage in der Rohrleitung festgehalten werden, auf den zur Aufnahme der erforderlichen Ballastwassermenge benötigten Raum verringert. Beim Versenken des Dükers, der aus einem Sohlenrohr und daran beiderseits in den Knickpunkten anschließenden Uferschenkeln besteht, wird so vorgegangen, daß der Düker zunächst auf der Seite liegend, über eine Dükerrinne eingeschwommen wird und dann durch Umklappen in die aufrechte Lage versenkt wird. Ein derartiges Verfahren ist in Gräben bzw. Künetten überhaupt nicht anwendbar, da es zunächst die Fertigstellung der gesamten Leitung außerhalb der Künette erfordert und bei Krümmungen, deren Tiefe größer ist als die Breite der Künette, in auf der Seite liegendem Zustand nicht eingebracht werden kann.

Bei einem Verfahren zum Herstellen eines Unterwassertunnels durch Aneinanderreihen von Tunnelabschnitten wurde es aus der DE-PS 11 29 173 bekannt, die für das Verlegen in tiefem Wasser bestimmten Tunnelabschnitte auf den bereits ausgelegten Teil der Tunnelröhre vorzufahren und jeweils von dem vorhergehenden, bereits verlegten Tunnelabschnitt aus einzubauen. Diese Vorgangsweise benötigt zu ihrer Durchführung eine spezielle Gestaltung der einzelnen Tunnelröhren, damit der jeweils nachfolgende Tunnelabschnitt entlang des bereits verlegten Tunnelabschnittes verfahren werden kann. Der Raumbedarf für die Anwendung dieses Verfahrens ist gewaltig, sodaß bei Künetten bzw. relativ engen Gräben diese Vorgangsweise nicht durchführbar ist.

Zur Herstellung von Unterwassertunneln wurde es weiters durch die DE-PS 369557 bekannt, an Land einen Tunnelteil herzustellen und das vordere Ende dieses Tunnelteils ins Wasser zu bringen, worauf ein zweiter Teil mit dem noch an Land befindlichen hinteren Ende des ersten Teiles vereinigt und darauf beide Teile ins Wasser gezogen werden, bis der ganze Tunnel von einer Landseite oder auch je eine Tunnelhälfte von beiden Landseiten her vollendet ist. Dieses Verfahren ist schon aus Platzgründen für die Herstellung eines Stranges von Einzelelementen in einer Künette nicht anwendbar. Außerdem ist ein Einrichten des Stranges auf einen genauen Verlauf kaum ausführbar.

Durch die Schweizer Patentschrift 441135 wurde ein Verfahren zum Bau von Unterwasserleitungen bekannt, bei welchem von Schiffen aus über eine Rutsche vorher zusammengesetzte Rohrleitungen kontinuierlich je nach Weiterbewegung des Schiffes in das Wasser bis auf den Grund des Gerinnes oder Meeres verlegt werden. Begreiflicherweise ist ein solches Verfahren für das Verlegen von Strängen in Künetten oder relativ engen Gräben nicht geeignet.

Gemäß der US-Patentschrift 4,388,021 wird, ausgehend von einer abgeschoteten Baugrube, durch das dichte Schot hindurch ein Schneidkopf vorgepreßt, der im wesentlichen rohrförmig gestaltet ist, wobei der vom Rohr umschlossene Raum ausgegraben wird. Der Preßkopf ist gegen die Frontseite eines Elementes des zu verlegenden Stranges von Rohren abgestützt, sodaß fortschreitend mit dem Einpressen des Preßkopfes der Strang im Erdreich vorgeschoben wird. Dieses Verfahren arbeitet in geschlossener Bauweise und ist damit für die meisten Verlegearbeiten von Kanalrohren zu aufwendig.

Durch die DE-OS 25 23 339 wurde es bekannt, in einem offenen Graben einen aus einzelnen Rohrschüssen zusammengesetzten Rohrstrang zu verlegen, wobei im Abstand hinter der Ortsbrust durch Aufschütten des ausgehobenen Erdreiches der Graben wieder geschlossen wird. Gebrauch gemacht wird hiebei von einem an das Vortriebsschild angebauten, sogenannten Rohrverlegekasten, der im oberen Bereich eine Rohreinsenköffnung und an seiner rückwärtigen Schotwand eine Durchgangsöffnung für die zu verlegenden Rohre aufweist. Der Rohrverlegekasten bewegt sich dabei gemeinsam mit dem Schild in Vortriebsrichtung weiter, und durch die rückwärtige Schotwand des Rohrverlegekastens werden, entgegen der Vortriebsrichtung, die einzelnen Rohrelemente an die bereits verlegten Rohrelemente angeschlossen. Diese Vorgangsweise ist relativ kompliziert auszuführen und bedarf eines mit einem Schild gekoppelten Rohrverlegekastens, wodurch die ganze Einheit, die bewegt werden muß, sehr voluminös ausfällt.

Durch die NL-A-711 46 65 wurde ein Holzfundament für einen Rohrteil zur Wasserführung bekannt, mit dem Ziele, die Gefahr des Einsinkens des Fundamentes zu reduzieren. Das Fundament weist dabei zwei Reihen von im Boden stehenden Holzpfahlen auf. An die Pfähle einer Reihe wird jeweils ein Längsträger, parallel zur Fläche der Tragkonstruktion, genagelt und die überstehenden Köpfe der Pfähle durch eine Kreissäge abgeschnitten, die durch die Längsträger geführt werden kann. Auf die Pfähle und die Längsträger werden Oberbalken gelegt und festgenagelt. Die seitlich von den Längsbalken und unten von dem gewachsenene Boden zwischen den beiden Pfahlreihen begrenzte Rinne wird mit Erde vollgeschüttet und die Kastenprofil aufweisenden Rohrelemente auf das Fundament und die Erde, die sich in der vorerwähnten Rinne befindet, gestellt.

Durch die DE-OS 35 45 364 wurde ein Verfahren zum Verlegen von Kanalfertigteilen unter Wasser bekannt, u.zw. in einer Baugrube, deren Sohle mit Pfählen versehen wird, welche Auflager für die den Rohrstrang bildenden, einzelnen Kanalfertigteile bildet. Diese Pfähle werden in die Sohle der Baugrube gerammt und müssen voneinander einen Abstand haben, der gleich der Länge eines Bauelementes ist. Die die Sohle der Baugrube überragende Stirnfläche der Pfähle bestimmt das Niveau, in welchem die Fertigteile sich befinden. Das Einrammen der Pfähle muß dabei mit großer Präzision erfolgen, um das richtige Niveau herstellen zu können. Problematisch wird diese Vorgangsweise, wenn ein Pfahl etwa zu tief eingerammt ist, da es dann kaum möglich ist, ihn wieder in die richtige Höhenlage für das Auflegen eines Fertigteiles zu bringen. Nachdem die Pfähle für den Rohrstrang in die Sohle der Baugrube eingerammt sind, wird beim Verlegen der einzelnen Rohre dann das zuletzt verlegte Fertigteil mit dem anschließend zu verlegenden Fertigteil über eine Gelenkverbindung verbunden. Diese Gelenkverbindung besitzt eine horizontale, quer zum Strang verlaufende Gelenksachse. Die Gelenkverbindung bildet eine Führung, welche dazu dient, die Stoßfläche des einzubringenden Fertigteiles genau an die Stoßfläche des bereits verlegten Fertigteiles zu schwenken. Die Teile jeder Gelenkverbindung sind lösbar ausgebildet, sodaß sie jeweils wiedergewonnen werden können. Das bekannte Verfahren ist in zweierlei Hinsicht problematisch, da einerseits das Niveau des zu verlegenden Rohrstranges abhängig ist von der Genauigkeit, mit der einzelne Pfähle in die Sohle des Grabens eingerammt werden, und darüberhinaus jeder verlegte Einzelteil mit einer Vorrichtung versehen werden muß, welche es erlaubt, den folgenden Einzelteil in die Baugrube einzuschwenken, u.zw. daß er nach dem Verschwenken eine Lage einnimmt, in der die Stirnfläche des bereits verlegten Kanalelementes übereinstimmt mit der Stirnfläche des eingeschwenken Kanalelementes. Hernach muß dann die ganze Schwenkeinrichtung vom verlegten Rohr wieder gelöst werden; all dies unter Wasser.

Aufgabe der Erfindung ist es nunmehr, bei einem Verfahren der eingangs erwähnten Art eine Verfahrensführung anzugeben, die es erlaubt, auf möglichst einfache Weise einen Strang aus Einzelelementen in einer mit Wasser gefüllten Künette bzw. einem Graben zu verlegen und dabei das gewünschte Niveau genau einzuhalten. Erfindungsgemäß wird dabei so vorgegangen, daß nach dem Herstellen des Grabens bzw. der Künette auf den Grabenboden eine Schicht aus Unterwasserbeton abgelagert wird, daß in der Unterwasserbetonschicht zueinander parallel zwei als Führungsschienen wirkende Auflageschienen für die Einzelelemente bzw. für den Strang in einer parallel zur Nivelette des Stranges verlaufenden Ebene verankert werden, daß das Abbinden des Unterwasserbetons abgewartet wird, so daß die Auflageschienen fixiert sind, daß, vorzugsweise an einer Stelle des Grabens, ein Einzelelement bis auf die Auflageschienen abgesenkt und auf den Auflageschienen gleitend, in Richtung der Auflageschienen um ein im wesentlichen seiner Länge entsprechendes Stück vorgeschoben wird, worauf ein weiteres Einzelelement an derselben Stelle des Grabens, an der bereits das vorhergegangene Einzelelement abgesenkt wurde, ebenfalls bis auf die Auflageschienen abgesenkt und wieder entlang den Auflageschienen gegen das zuvor abgesenkte Einzelelement bewegt und gemeinsam mit diesem um ein seiner Länge entsprechendes Stück entlang den Schienen vorgeschoben wird, und daß in dieser Weise durch Einbringen und Verschieben weiterer Einzelelemente der Graben mit einem Strang aus aneinanderschließenden Einzelelementen versehen wird, der auf den Auflageschienen ruht und damit die gewünschte Nivelette einnimmt.

Durch die erfindungsgemäße Verfahrensführung wird dabei durch einfaches Verlegen eines Schienenstranges sichergestellt, daß der Strang die richtige Nivelette einnimmt, wobei der Aufbau des Stranges von einer einzigen Stelle aus erfolgen kann. Verstrebungen der Seitenwände der Künette kein Hindernis bei der Herstellung des Rohrstranges bilden.

Beim Zusammenschließen zweier voneinander getrennt hergestellter Stränge wird dabei in weiterer Ausgestaltung des erfindungsgemäßen Verfahrens so vorgegangen, daß nach Anbau des letzten Einzelementes an den Strang das Hinterfüllen des Stranges bis knapp über den Grundwasserspiegel vorgenommen wird und der Anschluß an den durch einen Zwischenraum vom Strang getrennten Nachbarstrang erfolgt, wobei das Grundwasser aus dem Raum zwischen den zu verbindenden Strängen, z.B. durch einen Brunnen oder durch Abpumpen, entfernt wird, und in die so entleerte Baugrupe ein Verbindungsstück eingebracht oder dort aus Ortsbeton errichtet und mit den Enden der beiden benachbarten Stränge verbunden wird. Da hiebei das Grundwasser nur kurzzeitig in seinem Niveau im Bereich des Raumes zwischen den beiden Strängen verändert wird, sind bleibende Nachteile durch Änderung des Grundwasserspiegels nicht zu befürchten.Die Verbindung zweier Abschnitte kann auch ohne jegliche Absenkung des Grundwassers vorgenommen werden, indem die Baugrubenwand und Sohle in diesem Bereich dicht ausgeführt wird. Dies kann beispielsweise durch Spundbohlen und auftriebsichere Unterwasserbetonsohlplombe erfolgen. Der stirnseitige dichte Abschluß der Verbindungsbaugrube ist durch die mit vorzugsweise Beton hinterfüllten Leitungsstränge gegeben.

Bei der Einrichtung zur Durchführung des erfindungsgemäßen Verfahrens sind, an den Führungsschienen Verankerungselemente, die sich von den Führungsschienen nach unten erstrecken, befestigt und die Führungsschienen an, bevorzugt als Querträger ausgebildeten,
Elementen mit sich von diesen nach oben erstreckenden Justierstangen fixiert , und zum Festhalten der Justierstangen an einer vorgegebenen Stelle ihrer Länge ortsfest angeordnete Halteelemente vorgesehen.

Die sich von den Führungsschienen nach unten erstreckenden Verankerungselemente dienen dabei dazu, in den Beton einzudringen und nach dem Abbinden des Betons die Führungsschienen in dem gewünschten Niveau zu fixieren. Die Markierungen an den Halteelementen werden bei zweckmäßig in einem konstanten Abstand von der Schienenoberkante angeordnet, so daß diese Markierungen von außen sichtbar sind und die Verbindung der Markierungen der einzelnen Halteelemente genau parallel zum Niveau der Schienen verläuft, sodaß durch Justierung der Markierungen gleichzeitig die Schienen in die richtige Lage justiert werden können. Die Halteelemente zum Festhalten der Justierstangen können dabei etwa an dem den Graben seitlich begrenzenden Verbau fixiert sein, sie können jedoch auch über quer über die Künette liegende Träger außerhalb des Grabens im Erdreich aufgelagert werden.

Um die Justierstangen wenigstens zum Teil wiederzugewinnen, nachdem die Schienen verlegt sind, kann in besonderer Ausgestaltung der erfindungsgemäßen Einrichtung vorgesehen werden, daß die Justierstangen lösbar mit den Querträgern, auf welchen die Führungsschienen fixiert sind, verbunden werden, wobei die lösbare Verbindung der beiden Abschnitte bevorzugt als Schraubverbindung oder als Stiftverbindung ausgebildet ist, wobei die Stiftverbindung mindestens einen in eine Umfangsbohrung des einen Abschnittes der Justierstange einschiebbaren Stift aufweist, der über einen am Außenumfang des einen Justierstangenabschnittes schwenkbar gelagerten Hebel am Justierstangenabschnitt gelagert ist, wobei an dem Hebel ein Betätigungselement, z.B. ein Zugseil, angreift. Die Schraubverbindung ist dabei einfach durch Drehen des einen Abschnittes der Justierstange von dem mit den Querträgern fest verbundenen Justierstangenabschnitt lösbar und kann wieder gewonnen werden. Bei der Stiftverbindung muß lediglich der Hebel etwa mittels des Zugseiles verschwenkt werden, so daß der Stift außer Eingriff mit der am Mantel des einen Abschnittes vorgesehenen Umfangsbohrung kommt. Hernach kann der obere Justierstangenabschnitt, welcher den Hebel und den Stift trägt, von dem anderen Justierstangenabschnitt, der fest mit dem Querträger verbunden ist, abgezogen werden. Zur einfachen Justierung des Schienenstranges in die richtige Nivelette können in besonderer Ausgestaltung der erfindungsgemäßen Einrichtung die Halteelemente der Justierstangen als drehbar am Aussteifungsprofil des Grabens oder an der den Graben überspannenden Trägerkonstruktion gelagerte Gewindehülsen ausgebildet sein, wobei mit jeder Gewindehülse ein an der Justierstange vorgesehenes Gewinde in Eingriff steht. Durch Drehen der Gewindehülsen können hiebei die Justierstangen mehr oder weniger angehoben werden, wodurch die mit den Justierstangen fest verbundenen Schienen ebenfalls angehoben bzw. abgesenkt werden und in die richtige Nivellete gebracht werden können.

Eine weitere Ausgestaltung der Einrichtung kennzeichnet sich dadurch, daß das Halteelement der Justierstange als mit einer Betätigungsstange versehener Schwenkhebel ausgebildet ist, der eine von der Justierstange durchsetzte Bohrung mit den Durchmesser der Justierstange übersteigendem Durchmesser aufweist derart, daß die Justierstange durch Verkanten in der Bohrung gehalten wird. Auf diese Art und Weise ist es besonders einfach möglich, die Justierung der Schienen in dem geplanten Niveau herzustellen. Um eine Feinjustierung durchzuführen, kann in Weiterbildung dieser Ausführungsform der die Bohrung für die Justierstange aufweisende Schwenkhebel an einem mittels einer Schraubspindel verstellbaren Lagerbock gelagert sein, wobei die Schraubspindel drehbar, jedoch in axialer Richtung unverschiebbar, in einem im Graben ortsfest, z.B. an einer Grabenaussteifung, verankerbaren Halterung gelagert ist. Die Feinjustierung erfolgt dabei in einfacher Weise durch Betätigen der Schraubspindel, nachdem mittels des Schwenkhebels eine Grobjustierung der Justierstange und damit der Schienen vorgenommen wurde. Eine Feinjustierung kann jedoch auch in der Weise verwirklicht werden, daß das Halteelement zum Festhalten der Justierstange von einem Zahnritzel gebildet ist, das in eine an der Justierstange vorgesehene Zahnstange eingreift und mittels einer Klinke feststellbar und über eine Handkurbel in Drehung versetzbar ist. Durch Drehen der Handkurbel kann dabei die Justierstange um den Mindestbetrag einer Zahnteilung angehoben werden. Das Vorschieben des auf die Führungsschienen jeweils abgesetzten Einzelelementes erfolgt in einfacher Ausgestaltung der erfindungsgemäßen Einrichtung durch eine Hydraulikpresse, die mit einem Druckstempel, der teleskopartig ausgebildet sein kann, versehen ist, wobei das freie Ende des Druckstempels an einem auf den Führungsschienen gleitbaren, an der Stirnfläche des vorzuschiebenden Einzelelementes angreifenden Schlittens abgestützt ist, wobei die Presse gegen ein Querschot des Grabens oder gegen einen Anschlag, der an den Führungsschienen befestigt ist, abgestützt ist. Durch Beaufschlagen der Hydraulikpresse mit dem Fluid übt der Druckstempel auf das im Strang jeweils letzte Element einen in Richtung der Strangachse verlaufenden Druck aus und schiebt das letzte Element gegen den Strang und in weiterer Folge den gesamten Strang in Richtung der Schienen vorwärts.

In einer anderen Ausgestaltung kann jedoch zum Vorschieben des auf die Führungsschienen jeweils abgesetzten Einzelelementes ein auf den Führungsschienen verschiebbarer, an der Stirnfläche des Einzelelementes abstützbarer Schlitten vorgesehen sein, der mittels eines am unteren Ende des Grabens angeordneten, an den Führungschienen oder an den Verankerungseisen oder über Zuganker im seitlich des Künettenendes liegenden Erdreich verankerten Seilzuges betätigbar ist. Durch Betätigen des Seilzuges wird hiebei, ähnlich wie mit der vorerwähnten Hydraulikpresse, das im Strang jeweils letzte Element an das vorhergehende Element angepreßt und dann der gesamte Strang in Richtung der Schienen weiterbewegt. Mit dem Seilzug muß jedoch nicht der gesamte Strang weiterbewegt werden, sondern erlaubt es dieselbe Vorrichtung auch Einzelelemente oder aus solchen zusammengesetzte Strangteile von der Einbringöffnung am oberen Ende der Baugrube an die jeweils vorgesehenen Einbaustellen zu ziehen. Dies wird bei langen Strängen, bei welchen die Reibungskräfte der Einzelelemente an den Schienen eine Knickung des Stranges verursachen könnten, vorteilhaft sein.

Die Betätigungseinrichtung für den Seilzug kann auch an jener Stelle vorgesehen sein, wo das Einzelelement in die Künette versenkt wird. Es muß dann lediglich eine Umlenkung für das am Schlitten angreifende Seil im Bereich des unteren Endes des Grabens vorgesehen werden. Das untere Ende des Grabens ist dabei jenes Ende, das von jener Stelle abliegt, an der die Einzelelemente in den Graben (in die Künette) versenkt werden.

Die Erfindung wird nachstehend anhand der Zeichnung beispielsweise näher erläutert.

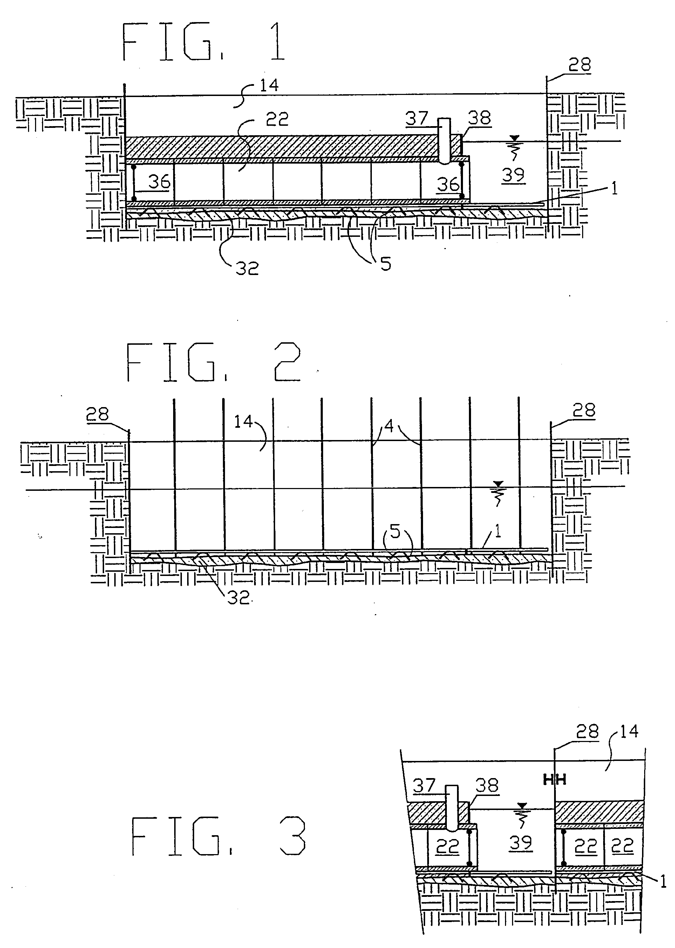

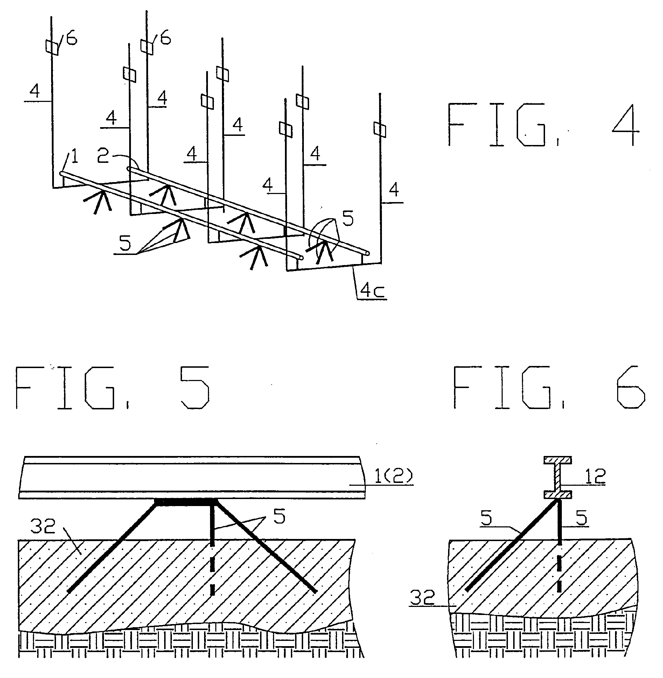

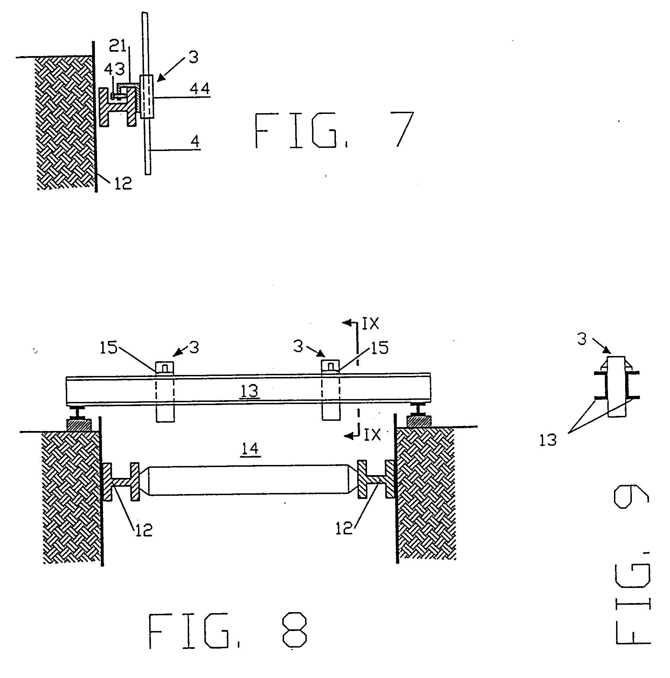

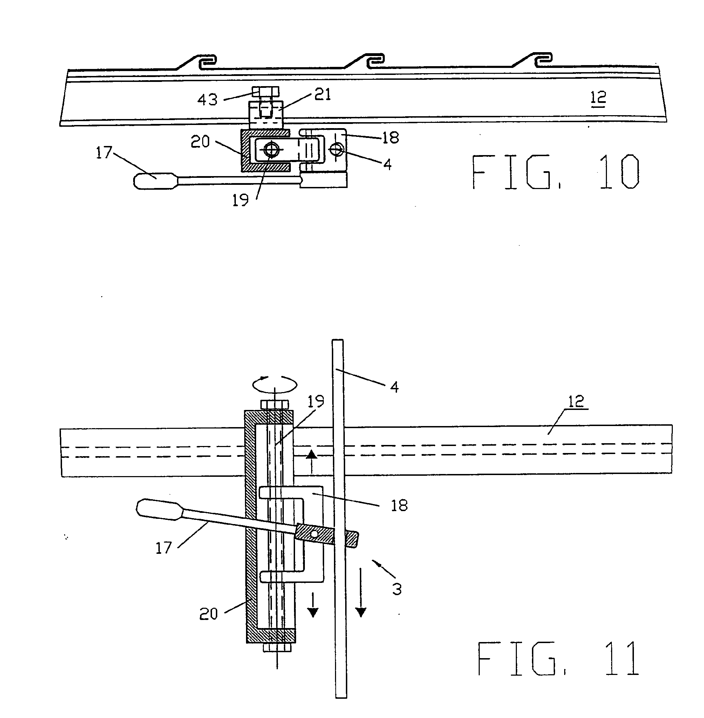

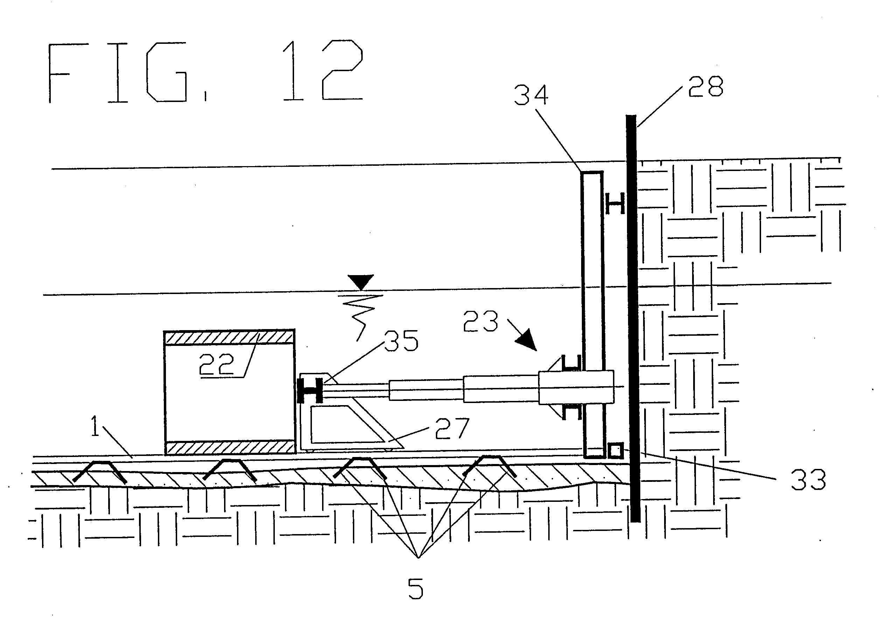

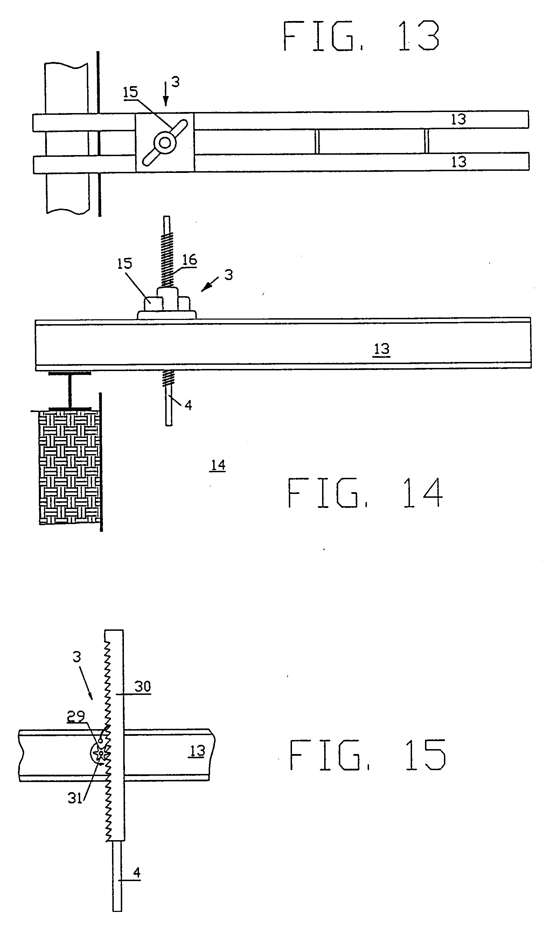

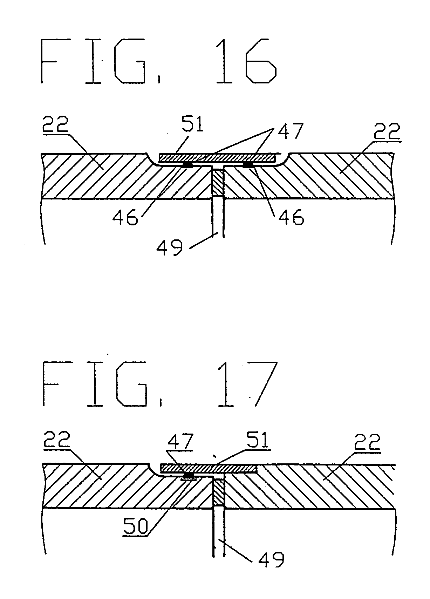

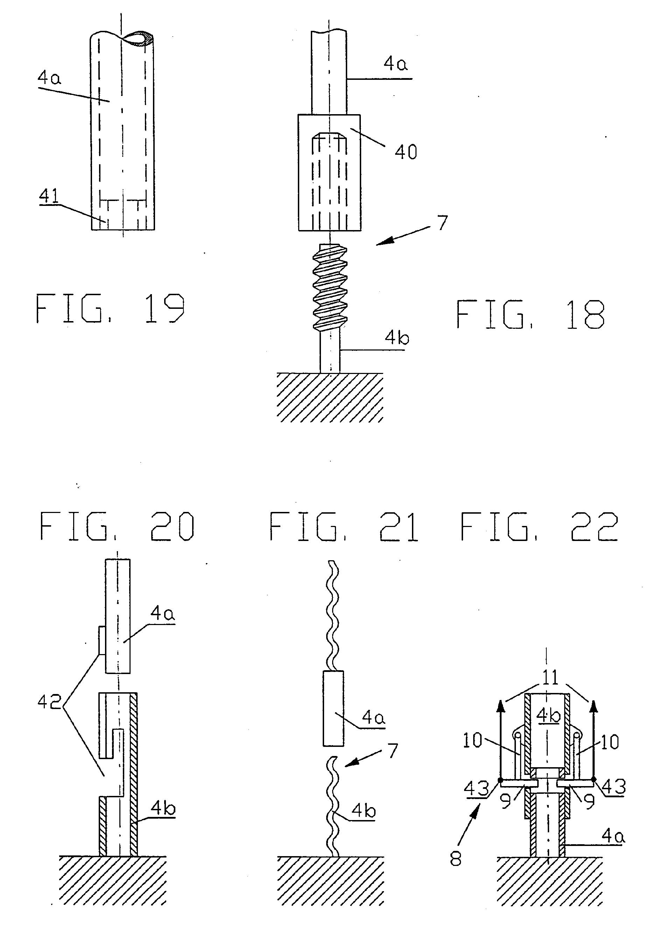

Fig. 1 zeigt in einem Längsschnitt einen nach dem erfindungsgemäßen Verfahren in eine Künette eingebauten Strang, Fig. 2 veranschaulicht die zum Einbau des in Fig. 1 dargestellten Stranges vorgesehene Anordnung, Fig. 3 zeigt das rechte Ende der Fig. 1 mit einem benachbarten Strang, vor dem Einbau des Verbindungsstückes zwischen den beiden Strängen, Fig. 4 veranschaulicht in schaubildlicher Darstellung ein bei Anwendung des erfindungsgemäßen Verfahrens zur Anwendung kommendes Gerüst (Führungsschienenkorb) zur Auflage und zum Stützen des Rohrstranges während der Herstellung, die Fig. 5 und 6 zeigen in einander zugeordneten Normalrissen, die Verankerungseisen für die Führungsschienen 1, 2, gemäß Fig. 1. Fig. 7 ist in einem Schnitt senkrecht zur Künette, eine Anordnung zur Justierung des Führungsschienenkorbes, Fig. 8 zeigt einen Querschnitt durch eine Künette mit der Anordnung zur Festlegung des Führungsschienenkorbes, Fig. 9 einen Schnitt entlang der Linie IX-IX in Fig. 8, Fig. 10 in Draufsicht ein Detail zur Festlegung des Führungsschienenkorbes, Fig. 11 den der Fig. 10 zugeordneten Aufriß. Fig. 12 in einem Längsschnitt durch eine Künette, die Anordnung zum Vorschieben der Einzelelemente des Rohrstranges, die Fig. 13 und 14 in Draufsicht und Vorderansicht, eine Anordnung zur Verstellung und Fixierung des Führungsschienenkorbes, Fig. 15 eine gegenüber der Ausführungsform gemäß den Fig. 13 und 14 modifizierte Anordnung zur Verstellung und Fixierung des Führungsschienenkorbes, Fig. 16 eine Rohrverbindung zwischen den benachbarten Enden zweier Asbestzementrohre, Fig. 17 eine Verbindung zwischen den benachbarten Enden von Betonrohren, und die Fig. 18 bis 22 verschiedene Anordnungen zur lösbaren Verbindung der Abschnitte der Justierstangen.

In Fig. 1 ist mit 14 eine Künette bzw. Graben bezeichnet, in welche ein Strang, bestehend aus mehreren Einzelelementen 22 verlegt ist. Die Elemente 22 sind in der Künette 14 auf Führungschienen 1 abgestützt, die über Verankerungseisen 5 in einer Schicht 32 aus Unterwasserbeton verankert sind. Das Dreieck in Fig. 1 bezeichnet den Grundwasserspiegel. Die Ausgangsposition vor dem Einbringen der Einzelelemente 22 in die Künette 14 ist aus Fig. 2 ersichtlich. Die Künette 14 kann an den Enden durch Querschotte 28 abgeschottet sein.

Die Details werden nunmehr anhand der einzelnen Zeichnungsfiguren näher erläutert:

Der in Fig. 4 schaubildlich dargestellte Führungsschienenkorb besteht aus den Führungsschienen 1, 2, den Verankerungseisen 5 zum Einsenken in den Unterwasserbeton, Bügel, Querträger 4c und Justierstangen 4 sowie Halteelemente 6, die als Befestigungsschellen ausgebildet sein können. Die Führungsschienen 1, 2 sind aus Stahl, Holz, Stahlbeton oder anderen Materialien mit vergleichbaren Eigenschaften hergestellt und können I-Querschnitt, Winkelquerschnitt, einen quadratischen oder kreisförmigen Hohl- oder Vollquerschnitt aufweisen.

Die Stöße der Führungsschienen 1, 2 müssen glatt und ohne Gegenkante ausgeführt werden.

Die Verankerungseisen 5 werden an den Führungsschienen 1,2 angeschweißt (Fig. 5, 6) bzw. bei anderen Materialien adequat befestigt und müssen folgende Kräfte in die Unterwasserbetonschicht 32 nach deren Abbinden übertragen:

Gewicht des Stranges aus Einzelelementen 22 und des Führungsschienenkorbes (Fig. 4), die Schubkraft, die beim Vorschub des Stranges in die Führungssschienen 1, 2 eingeleitet wird, und weiters quer zur Künette 14 wirkende Kräfte, die sich zufolge Knickung der durch die Schubkraft mit Druck belasteten Rohrleitung und Toleranzen bei den Rohrmuffen ergeben können.

Die Querträger und Justierstangen (Fig. 4) sind nur eine Hilfskonstruktion, welche das Absenken und vor allem das Einrichten der Führungsschienen 1, 2 unter Wasser erlaubt. Sie können aus denselben Materialien und Querschnitten - wenngleich in geringerer Dimension - wie die Führungsschienen 1, 2 ausgeführt werden.

Die Justierstangen 4 können wiedergewinnbar oder in der Künette verbleibend ausgeführt werden. Wiedergewinnbare Justierstangen bestehen dabei aus zwei Abschnitten 4a und 4b, die über eine lösbare Verbindung miteinander verbunden sind. Sie können, da mehrfach verwendbar, justierbar ausgeführt werden (z.B. Gewindestange, Zahnstange usw.). Bei in der Künette 14 verbleibenden Justierstangen (einfache Querschnitte, z.B. Rundstahl) befindet sich die Justiereinrichtung an den Befestigungschellen 6. Ausführungsbeispiele wiederverwendbarer Justierstangen sind in den Fig. 18-22 dargestellt. Die Fig. 18 und 19 sowie 21 veranschaulichen hiebei eine Schraubverbindung 7. Gemäß Fig. 18 ist der Justierstangenabschnitt 4b am Ende mit einem Bolzengewinde versehen, auf welches ein Muttergewinde aufschraubbar ist, das in einer an das Ende des Justierstangenabschnittes 4a geschweißten Hülse 40 oder in einer in das hohl ausgebildete Ende eines Justierstangenabschnittes 4a eingesetzten Mutter 41 ausgebildet ist. Gemäß Fig. 20 ist eine nach Art eines Bajonettverschlusses 42 ausgebildete, lösbare Verbindung zwischen den Justierstangenabschnitten 4a und 4b vorgesehen. Gemäß Fig. 22 ist eine Stiftverbindung 8 zwischen den beiden Abschnitten 4a und 4b der Justierstange 4 vorgesehen. Hiebei ist mindestens ein in eine Mantelbohrung des Abschnittes 4b einschiebbarer Stift 9 vorgesehen, der an einem schwenkbar am anderen Abschnitt 4b der Justierstange gelagerten Hebel 10 befestigt ist. Am Hebel 10 greift an dort vorgesehenen Ösen 43 ein Zugseil 11 an. Durch Ausüben einer Zugkraft auf das Seil 11 wird der Hebel 10 geschwenkt und der am Hebel 10 befestigte Stift 9 aus der Mantelbohrung des Justierstangenabschnittes herausbewegt, so daß der Justierstangenabschnitt 4a von dem Justierstangenabschnitt 4b abgezogen werden kann.

Die Halteelemente 3 für die Justierstangen 4 und damit für die Führungsschienen 1, 2 können entweder an den Aussteifungen 12 des Grabenwandverbaues (Fig. 7, 10, 11) oder an quer über die Künette 14 angeordneten Trägerkonstruktionen 13 (Fig. 8, 9 und 13 bis 15) angebracht werden.

Die Justiereinrichtung soll über eine Grobjustierung (rasches Absenken des Korbes mit den Führungsschienen 1, 2) und eine Feinjustierung (zentimetergenaues Einrichten) verfügen. Es sind aber auch Ausführungen mit nur einer Justiermöglichkeit denkbar (z.B. eine Zahnstange mit Ritzel gemäß Fig. 15). Bei in der Künette 14 verbleibenden Justierstangen 4 aus Formrohr oder Rundstahl kann z.B. eine eine Grobjustierung und eine Feinjustierung erlaubende Halteeinrichtung gemäß den Fig. 10 und 11 vorgesehen werden. Gemäß Fig. 7 und den Fig. 10 und 11 ist die Aussteifung 12 von einem I-Träger gebildet. In den I-Träger ist eine Halterung 21 eingehängt, die mittels einer Klemmschraube 43 am I-Träger fixiert werden kann. Im Falle der Ausführungsform nach Fig. 7 ist an der Halterung eine Hülse 44 befestigt, in welche die Justierstange 4 eingeschoben und mittels einer Schraube 45 fixiert werden kann, nachdem sie und damit auch die Schienen 1, 2, die die Justierstange 4 trägt, in das richtige Niveau gebracht wurden. Gemäß den Fig. 8 und 9 sowie 13 und 14 sind die Halteelemente 3 der Justierstangen 4 an einer den Graben (die Künette 14) überspannenden Tragkonstruktion 13 angeordnet und als Gewindehülsen 15 ausgebildet, die drehbar an der Tragkonstruktion 13 angeordnet sind und in welche Gewindehülsen 16 die Justierstangen 4 mit einem Gewinde 14 eingreifen. Das Halteelement 3 der Justierstange 4 ist gemäß der Ausführung, die in den Fig 10 und 11 dargestellt ist, als mit einer Betätigungsstange 17 versehener Schwenkhebel 18 ausgebildet, der eine von der Justierstange (4) durchsetzte Bohrung mit den Durchmesser der Justierstange (4) übersteigendem Durchmesser aufweist, derart, daß die Justierstange 4 durch Verkanten in der Bohrung gehalten wird. Dabei ist der die Bohrung für die Justierstange 4 aufweisende Schwenkhebel 18 an einem mittels einer Schraubspindel 19 verstellbaren Lagerbock 20 gelagert, wobei die Schraubspindel 19 drehbar, jedoch in axialer Richtung unverschiebbar in einem im Graben ortsfest, z.B. an einer Grabenaussteifung 12 verankerbaren Halterung 21 gelagert ist. Gemäß Fig. 15 ist das Halteelement 3 zum Festhalten der Justierstange 4 von einem Zahnritzel 29 gebildet, das in eine an der Justierstange 4 vorgesehene Zahnstange 30 eingreift und mittels einer Klinke feststellbar und über eine Handkurbel 31 in Drehung versetzbar ist. Die Klinke kann auch direkt in die Zahnstange eingreifen. Die Zahnstange kann auch mittels einer Klemmschelle, die an der Tragkonstruktion angeordnet ist, fixiert werden.

Beim Einbau der Schienen 1, 2 in die Künette 14 wird wie folgt vorgegangen: Zunächst werden die Halteelemente 3 ortsfest montiert. Hernach werden die Querträger mit den Justierstangen 4 in die Halteelemente eingefädelt und festgehalten, so daß eine Arbeitsbühne auf den Querträgern z.B. mittels Holzpfosten errichtet werden kann. Die Führungsschienen 1, 2 werden zusammengeschweißt, von der Arbeitsbühne aus auf die Querträger abgesetzt (Fig.4) und dort befestigt. Die Führungschienen 1, 2 werden dann - noch über dem Grundwasserniveau - in eine parallel zur künftigen Nivelette verlaufenden Ebene fein einjustiert, worauf Markierungen auf die Justierstangen 4 entsprechend der Nivelette aufgebracht werden. Hernach wird der Führungsschienenkorb schrittweise abgesenkt, wobei die im elastischen Bereich liegende Durchbiegung der Führungsschienen 1, 2 das Ausmaß der einzelnen Absenkschritte vorgibt. Dazu werden die meisten Befestigungsschellen gelöst und nur wenigeweit voneinander entfernte - Justierstangen 4 herangezogen (größere Schritte). Das Feinjustieren erfolgt dann mit Theodolit oder Nivelliergerät anhand der Markierungen.

Für den Vorschub der jeweils von der gleichen Stelle aus in die Künette 14 auf die Führungsschienen 1, 2 abgesenkten Einzelelemente 22 eignet sich günstig eine unter Wasser auf den Führungsschienen 1, 2 aufgesetzte Hydraulikpresse 23 gemäß Fig. 12. Die Reaktionskräfte der Presse 23 werden entweder zur Gänze in das unmittelbar hinter der Presse 23 liegende Querschott 28 der Künette 14 oder in die Führungsschienen 1,2 eingeleitet, für welchen Fall ein Anschlag 33 auf den Führungsschienen 1, 2 angebracht wird, an dem sich die Presse 23 abstützt. Die Einleitung der Kräfte in das Querschott 28 erfolgt zur besseren Lastverteilung über einen am Querschott 28 abgestützten Träger 34. Der Hydraulikzylinder 23 wird mit teleskopartigem Stempel 24 ausgeführt, um einen großen Hub (mindestens 3 m bei einer Einzelelementlänge von 2,5 m) bei geringer Einbautiefe zu ermöglichen. Die Krafteinleitung in das jeweils letzte Einzelelement 22 des Stranges erfolgt mittels eines Querträgersoder Ringes 35, der an einem Schlitten 27 angeordnet ist, der gleitbar auf den Führungsschienen 1, 2 geführt ist. Noch besser ist es, wenn Presse 23 und Schlitten 27 auf einem Rahmen montiert sind, welcher dann auf die Führungsschienen 1, 2 aufgesetzt wird. In diesem Fall wird der Schlitten 27 in derselben Ebene wie der Preßzylinder 23 geführt. Die Führungskufe oder -rolle des Schlittens gleitet dann auf dem o.a. Rahmen (nicht dargestellt).

Anstelle einer Presse 23 kann (in nicht dargestellter Weise) auch ein Seilzug für den Vorschub des Stranges vorgesehen werden. Dieser Seilzug ist am von der Einbringstelle der Einzelelemente abliegenden Ende der Künette 14 anzubringen. Die Reaktionskraft des Seilzuges kann hier nicht in das Querschott eingeleitet werden, weil es sich um eine Zugkraft handelt. Entweder erfolgt die Ableitung dieser Zugkraft über die im Beton 32 verankerten Führungsschienen 1, 2 über die Verankerungseisen 5 in den Unterwasserfundamentbeton 32 oder über gesondert anzubringende Zuganker in das hinter oder seitlich dem Künettenende liegende Erdreich, je nachdem wo die Anker angebracht werden. Wie bei der Presse ist auch hier ein Querträger, der auf einem Schlitten montiert ist, zur Einleitung der Vorschubkraft in das im Strang letztverlegte Einzelelement 22 erforderlich. Die Seile des Seilzuges sind am Querträger außerhalb (seitlich) des im Strang letzten Einzelelementes 22 verankert. Der Antrieb für den Seilzug kann auch im Bereich der Einbringstelle der Einzelelemente angeordnet werden, in welchem Fall dann am anderen Ende der Künette 14 ortsfest eine Umlenkrolle anzubringen ist.

Die Seilzuglösung ist bei sehr langen Bauabschnitten, wo die Druckbelastung der Presse infolge Reibungskraft des Einzelelementes auf den Führungsschienen 1, 2 eine Knickung der Leitung verursachen könnte, denkbar. Dies deshalb, weil bei Seilzug nur jedes Einzelelement einzeln bewegt zu werden braucht, wofür nur relativ geringe Kräfte erforderlich sind, im Vergleich zu jenen Kräften, die aufzuwenden sind, wenn eine Gruppe aus drei oder vier oder noch mehr Elementen längs den Schienen 1, 2 verschoben werden muß.

Beim Herstellen des Stranges aus den Einzelelementen 22 wird wie folgt vorgegangen:

Die Ausgangssituation ist in Fig. 2 dargestellt, d.h. die Führungsschienen 1, 2 mit den Justierstangen 4 sind unter Wasser abgesenkt und in der Unterwasserbetonschicht 32 in der richtigen Lage (Nivelette) verankert. Soferne die Presse 23 nicht bereits mit den Führungsschienen mitabgesenkt wurde, wird sie mit einem Rahmen, auf dem sie montiert ist, abgesenkt, solange bis sie auf den Führungsschienen 1, 2 aufsitzt. Sodann wird das erste der Einzelelemente 22, nachdem es mit einer inneren Abschottung 36 (Fig. 1) versehen wurde, bis auf die Schienen 1, 2 abgesenkt. Die innere Abschottung kann entfallen, wenn die Ausbildung der Stirnseiten der Einzelelemente und der Baugrubenwand dazu geeignet ist, einen zum Zweck der späteren Hinterfüllung ausreichend dichten Abschluß zu bilden. Wasserdichtheit ist dabei nicht erforderlich, da diese durch die Hinterfüllung zu einem späteren Zeitpunkt gegeben ist und dann der Strang ausgepumpt werden kann. Die Absenkung der Einzelelemente 22 erfolgt je nach Größe und Gewicht mittels Portalkran oder Mobilkran. Nach dem Absenken auf die Schienen 1, 2 wird mittels der Presse 23 das erste Einzelelement 22 weitergeschoben (in der Zeichnung nach links). Hernach werden - nachdem das erste Einzelelement 22 mindest um ein seiner Länge entsprechendes Stück auf den Schienen vorgeschoben wurde - nach und nach weitere Einzelelemente 22 an derselben Stelle wie das erste Einzelelement 22 auf die Schienen 1, 2 abgesenkt. Der ständig länger werdende Rohrstrang wird von der Presse 23 immer wieder um die Hublänge (Einzelelementlänge vermehrt um die Einbautoleranz) weitergeschoben, wobei das jeweils zuletzt abgesenkte Einzelelement dichtend an das im Strang zuletzt liegende Einzelelement angeschlossen wird. Die Rohrverbindungen können dabei so ausgebildet sein,wie dies beispielsweise in den Fig. 16 bzw.17 für Asbestzementrohre bzw.Stahlbetonrohre dargestellt ist. Gemäß Fig. 16 besitzen die beiden Einzelelemente 22, die miteinander zu verbinden sind, an ihren Enden außen Ringnuten 46,
in welche Profilgummiringe 47 eingelegt sind.Die beiden Enden sind von einem Stahlring 48 umfaßt, welcher die Fuge zwischen den beiden Einzelelementen 22 überbrückt und die Profilgummiringe 47 preßt. In die Fuge kann ein Spanplattenring 49 eingelegt sein, der an der Stirnfläche eines der beiden Einzelelemente 22 vor dessen Absenken in die Künette fixiert wurde. Bei der in Fig. 17 dargestellten Verbindung zweier als Stahlbetonfertigteilrohr vorliegender Einzelelemente 22 ist bei einem Einzelelement ein U- Querschnitt aufweisender Ring 50 aus Stahl eingelegt, der in seiner Rinne einen Profilgummiring 47 aufnimmt. Am Ende des benachbarten Einzelelementes 22 ist eine Stahlmuffe 51 fixiert, die über die Stirnfläche des Einzelelementes vorsteht und über den Profilgummiring 47 des benachbarten Elementes 22 beim Zusammenbau der Elemente geschoben wird. In der Fuge zwischen den Elementen kann wieder ein Spanplattenring 49 angeordnet werden.

Das letzte Einzelelement im Strang wird mit einer Abschottung und einem Standrohr 37 versehen, welches das Einbringen einer Saugleitung oder einer Tauchpumpe ermöglicht. Das letzte Einzelelement 22 verfügt neben der inneren Abschottung auch über eine äußere Abschottung 28 (Fig. 3), die den zwischen Einzelelement und Seitenwand der Künette verbleibenden Künettenquerschnitt abschließt. Die innere Abschottung und das Standrohr kann wie beim ersten Einzelelement entfallen, wenn mit dem Auspumpen des Stranges solange zugewartet wird, bis die dichte Verbindungsbaugrube zweier benachbarter Abschnitte fertiggestellt ist. Die äußere Abschottung stellt solcherart eine Schalung für das spätere Verfüllen der Künette mit Beton dar. Die Kräfte auf die Abschottung sind sehr gering, da die Betoneinbringung in Schichten erfolgt und daher kaum hydrostatischer Druck entsteht. Trotzdem empfiehlt sich eine Absteifung der Abschottung 38 gegen das Querschott 28 der Künette. Nachdem das letzte Einzelelement an den Strang angebaut ist, wird die Presse 23 ausgebaut. Es ergibt sich dann die in Fig. 1 dargestellte Situation. Der Raum links vom Schott 38 ist mit Beton gefüllt, der Raum rechts vom Schott 38 mit Wasser. Die Betonfüllung reicht dabei bis in ein das Grundwasserniveau überschreitendes Niveau. Zum Zusammenschluß zweier in benachbarten Künetten verlegter Stränge wird wie folgt vorgegangen:

Die Baugrube 39 zwischen den beiden benachbarten Künetten ist - wie Fig. 3 veranschaulicht - stirnseitig durch das Querschott 38 und das äußere Querschott 28 der Künette und am Boden durch den Unterwasserbeton dicht. Entweder wird nun kurzfristig und örtlich das Grundwasser in der Baugrube 39 mittels Brunnen abgesenkt und so in trockener Baugrube das Verbindungsstück der beiden Stränge eingebaut, das ein Fertigteil sein kann oder aus Ortbeton hergestellt wird.

Eine zweite Möglichkeit bietet sich durch örtlich dichten seitlichen Verbau der Baugrube 39 mittels Spundwänden zu Beginn der Arbeit und durch örtlich dickeren auftriebssicheren Auftrag von Unterwasserbeton. So entsteht auch eine dichte Baugrube, die nur einmal leergepumpt werden muß. In diesem Fall kann man sogar auf die innere Ab schottung und das Standrohr 37 bei den Einzelelementen 22 verzichten.

## Patentansprüche

1. Verfahren zum Herstellen eines Stranges aus Einzelelementen (22), z.B. Rohrschüssen in einem Graben (14), beispielsweise einer Künette, unter Wasser, durch Absenken der Einzelelemente und Verbinden des jeweils zuletzt abgesenkten Einzelelementes mit dem zuvor abgesenkten Einzelelement, z.B. durch Einschieben oder Aufschieben der beiden Einzelelemente in- oder aufeinander und gegebenenfalls Hinterfüllen des Stranges mit Beton, dadurch gekennzeichnet, daß nach dem Herstellen des Grabens auf den Grabenboden eine Schicht (32) aus Unterwasserbeton abgelagert wird, daß in der Unterwasserbetonschicht zueinander parallel zwei als Führungsscheinen wirkende Auflageschienen (1,2) für die Einzelelemente bzw. für den Strang in einer parallel zur Nivelette des Stranges verlaufenden Ebene verankert werden, daß das Abbinden des Unterwasserbetons abgewartet wird,so daß die Auflageschienen fixiert sind,
daß, vorzugsweise an einer Stelle des Grabens, ein Einzelelement (22) bis auf die Auflageschienen abgesenkt und , auf den Auflageschienen gleitend, in Richtung der Auflageschienen um ein im wesentlichen seiner Länge entsprechendes Stück vorgeschoben wird, worauf ein weiteres Einzelelement an derselben Stelle des Grabens, an der bereits das vorhergegangene Einzelelement abgesenkt wurde, ebenfalls bis auf die Auflageschienen abgesenkt und wieder entlang den Schienen gegen das zuvor abgesenkte Einzelelement bewegt und gemeinsam mit diesem um ein seiner Länge entsprechendes Stück entlang den Schienen vorgeschoben wird, und daß in dieser Weise durch Einbringen und Verschieben weiterer Einzelelemente der Graben mit einem Strang aus aneinander schließenden Einzelelementen versehen wird, der auf den Auflageschienen (1,2) ruht und damit die gewünschte Nivelette einnimmt.

2. Verfahren nach Anspruch 1, dadurch gekennzeichnet, daß nach Anbau des letzten Einzelelementes an den Strang, das Hinterfüllen des Stranges bis knapp über den Grundwasserspiegel vorgenommen wird und der Anschluß an den durch einen Zwischenraum vom Strang getrennten Nachbarstrang erfolgt, wobei das Grundwasser aus dem Raum zwischen den zu verbindenden Strängen z.B. durch einen Brunnen oder durch Abpumpen entfernt wird und in die so entleerte Baugrube ein Verbindungsstück eingebracht oder dort aus Ortbeton errichtet und mit den Enden der beiden benachbarten Stränge verbunden wird.

3. Einrichtung zur Durchführung des Verfahrens nach Anspruch 1 oder 2 wobei an den Führungsschienen (1, 2) Verankerungselemente (5), die sich von den Führungsschienen (1, 2) nach unten erstrecken, befestigt sind und die Führungsschienen (1, 2) an, bevorzugt als Querträger ausgebildeten, Elementen (4c) mit sich von diesen nach oben erstreckenden Justierstangen (4) fixiert sind,
und zum Festhalten der Justierstangen (4) an einer vorgegebenen Stelle ihrer Länge ortsfest angeordnet Halteelemente (6) vorgesehen sind.

4. Einrichtung nach Anspruch 3, dadurch gekennzeichnet, daß die Justierstangen (4) zwei lösbar miteinander verbundene Abschnitte (4a, 4b) aufweisen, wobei die lösbare Verbindung der beiden Abschnitte (4a, 4b) bevorzugt als Schraubverbindung (7) oder als Stiftverbindung (8) ausgebildet ist, wobei die Stiftverbindung mindestens einen in eine Umfangsbohrung des einen Abschnittes (4b) der Justierstange einschiebbaren Stift (9) aufweist, der über einen am Außenumfang des einen Justierstangenabschnittes (4a) schwenkbar gelagerten Hebel (10) am Justierstangenabschnitt gelagert ist, wobei an dem Hebel (10) ein Betätigungselement, z.B. ein Zugseil (11) angreift

5. Einrichtung nach Anspruch 3 oder 4, dadurch gekennzeichnet, daß die ortsfesten Halteelemente (6) für die Justierstangen an einem Aussteifungsprofil 12) des Grabens bzw. der Künette oder an einer den Graben bzw. die Künette (14) überspannenden Trägerkonstruktion (13) angeordnet sind.

6. Einrichtung nach Anspruch 5, dadurch gekennzeichnet, daß die Halteelemente (3) der Justierstangen (4) als drehbar am Aussteifungsprofil (12) des Grabens oder an der den Graben überspannenden Trägerkonstruktion (13) gelagerte Gewindehülsen (15) ausgebildet sind, wobei mit jeder Gewindehülse (15) ein an der Justierstange vorgesehenes Gewinde (16) in Eingriff steht.

7. Einrichtung nach Anspruch 3, dadurch gekennzeichnet, daß das Halteelement (8) der Justierstange (4) als mit einer Betätigungsstange (17) versehener Schwenkhebel (18) ausgebildet ist, der eine von der Justierstange (4) durchsetzte Bohrung mit den Durchmesser der Justierstange (4) übersteigendem Durchmesser aufweist, derart, daß die Justierstange (4) durch Verkanten in der Bohrung gehalten wird.

8. Einrichtung nach Anspruch 7, dadurch gekennzeichnet, daß der die Bohrung für die Justierstange (4) aufweisende Schwenkhebel (18) an einem mittels einer Schraubspindel (19) verstellbaren Lagerbock (20) gelagert ist, wobei die Schraubspindel (19) drehbar, jedoch in axialer Richtung unverschiebbar in einem im Graben ortsfest, z.B. an einer Grabenaussteifung (12) verankerbaren Halterung (21) gelagert ist.

9. Einrichtung nach einem der Ansprüche 3 bis 8, dadurch gekennzeichnet, daß zum Vorschieben des auf die Führungsschienen (1, 2) jeweils abgesetzten Einzelelementes (22) eine Hydraulikpresse (23), insbes. mit teleskopartigem Druckstempel (24), vorgesehen ist, dessen freies Ende (25) an einem auf den Führungsschienen (1,2) oder einem Rahmen gleitbaren, an der Stirnfläche (26) des vorzuschiebenden Einzelelementes (22)angreifenden Schlittens (27) abgestützt ist, wobei die Presse(23) gegen ein Querschott (28) des Grabens oder gegen einen Anschlag, der an den Führungsschienen (1, 2) befestigt ist, abgestützt ist.

10. Einrichtung nach Anspruch 3, dadurch gekennzeichnet, daß das Halteelement (3) zum Festhalten der Justierstange (4) von einem Zahnritzel (29) gebildet ist, das in eine an der Justierstange (4) vorgesehene Zahnstange (30) eingreift und mittels einer Klinke feststellbar und über eine Handkurbel (31) in Drehung versetzbar ist.

11. Einrichtung nach einem der Ansprüche 3 bis 8 oder 10, dadurch gekennzeichnet, daß zum Vorschieben des auf die Führungsschienen (1, 2) jeweils abgesetzten Einzelelementes ein auf den Führungsschienen (1, 2) verschiebbarer an der Stirnfläche des Einzelelementes (22) abstützbarer Schlitten (27) vorgesehen ist, der mittels eines am unteren Ende des Grabens angeordneten, an den Führungsschienen (1, 2) und dadurch über Verankerungseisen (5) im Unterwasserbeton oder über Zuganker im seitlich des Künettenendes liegenden Erdreich verankerten Seilzuges betätigbar ist.

## Claims

1. A method for producing a run made of single elements (22), e.g. pipe sections in a trench (14), for example a drainage ditch under water, by lowering the single elements and connecting the single element which was lowered last to the previously lowered single elements, e.g. by inserting or slipping the two single elements into one another or onto one another, respectively, and, if required, by backfilling the run with concrete, characterized in that after the production of the ditch, a layer of underwater concrete is deposited on the ditch floor, that in the underwater concrete layer two bearing rails (1, 2), which are parallel with respect to one another and which act as guide rails for the single elements or for the run are anchored in a plane extending parallel to the run, that the setting of the underwater concrete is waited for, so that the bearing rails are fixed, that preferably at a position of the ditch a single element (22) is lowered onto the bearing rails, and sliding thereon it is advanced by a portion substantially equivalent to its length, whereupon a further single element at the same position in the ditch, at which the previous single element was lowered, is also lowered onto the bearing rails and advanced alongside the rails towards the previously lowered single element and advanced jointly with it along the rails by a portion equivalent to its length, and that in this manner by introducing and displacing further single elements the ditch is provided with a run of successive single elements resting on the bearing rails (1, 2) and thus being situated in the desired level.

2. A method as claimed in claim 1, characterized in that after the attachment of the last single element to the run, the backfilling of the run is made slightly over the ground water level and the connection to the neighbouring run, which is separated therefrom by a gap, is made, whereby the ground water from the space between the runs to be connected is removed by a well or by pumping off, for example, and a connecting element is introduced in the trench thus emptied or made there from in-situ concrete and connected with the ends of the two adjacent runs.

3. A device for carrying out the method as claimed in claim 1 or 2, whereby anchoring elements (5), which extend downwardly from the guide rails (1, 2), are attached to the guide rails (1, 2) and the guide rails (1, 2) are fixed on elements (4c), preferably arranged as crossbeams, by means of adjusting rods (4c) extending upwardly therefrom and stationary fixing elements (6) provided for the fixing of the adjusting rods (4) at a predefined position of its length are provided.

4. A device as claimed in claim 3, characterized in that the adjusting rods (4) comprise two detachably connected sections (4a, 4b), with the detachable connection of the two sections (4a, 4b) preferably being arranged as a screwed connection (7) or a pin connection (8), whereby the pin connection comprises at least one pin (9) insertable into the circumferential bore of the one section (4b) of the adjusting rod, which pin is mounted on the adjusting rod section (4a) via a lever (10) pivotably mounted in the outer circumference of the one adjusting rod section, whereby an actuating element such as a traction cable (11), for example, acts on the lever (10).

5. A device as claimed in claim 3 or 4, characterized in that the stationary fixing elements (6) for the adjusting rods are arranged on a stiffening profile (12) of the trench or the drainage ditch or on a girder arrangement (13) spanning the trench or the drainage ditch (14).

6. A device as claimed in claim 5, characterized in that the fixing elements (3) of the adjusting rods (4) are arranged as a threaded sleeve (15) rotatably arranged on the stiffening profile of the trench or the girder arrangement (13) spanning the trench, whereby a thread (16) provided on the adjusting rod is in engagement with every threaded sleeve (15).

7. A device as claimed in claim 3, characterized in that the fixing element (8) of the adjusting rod (4) is arranged as a pivoting lever (18) provided with an actuating rod (17), which pivoting lever is provided with a bore penetrated by the adjusting rod (4) having a diameter exceeding that of the adjusting rod (4), in such a way that the adjusting rod (4) is held in the bore by canting.

8. A device as claimed in claim 7, characterized in that the pivoting lever (18) provided with the bore for the adjusting rod (4) is held in a bearing block (20) adjustable by means of a screw spindle (19), with said screw spindle (19) being rotatably, in the axial direction however nondisplaceably held in a fixing device (21) which is stationarily anchored in a bracing of the trench (12), for example.

9. A device as claimed in one of the claims 3 to 8, characterized in that for the advancement of the single element (22) respectively placed on the guide rails (1, 2), there is provided a hydraulic press (23), in particular with a telescopic piston ram (24), whose free end (25) rests on a carriage (27) which is slidable on the guide rails (1, 2) or a frame and which acts on the front side (26) of the single element (22) to be advanced, whereby the press (23) is supported by a transverse bulkhead (28) of the trench or rests on a stop which is attached to the guide rails (1, 2).

10. A device as claimed in claim 3, characterized in that the fixing element (3) for fixing the adjusting rod (4) is provided by a pinion (29) which engages in a spur rack (30) provided on the adjusting rod (4) and which is fixable by means of a pawl and can be made to rotate by a crank handle (31).

11. A device as claimed in one of the claims 3 to 8 or 10, characterized in that for the advancement of the respective single element placed on the guide rails (1, 2) there is provided a carriage (27) which is displaceable on the guide rails (1, 2) and rests on the front side of the single element (22) and is actuatable by means of a tow arranged at the lower end of the trench and anchored on the guide rails (1, 2) and thus anchored through bonding ties (5) in the underwater concrete or through anchor bars in the soil situated laterally at the end of the ditch.

## Revendications

1. Procédé pour la fabrication d'une ligne de tubes consistant en des éléments particuliers (22), p.ex. des éléments de tuyaux dans un fossé (14), p.ex. une cunette, sous l'eau, par abaissement des éléments particuliers et raccordement de l'élément particulier abaissé en dernier lieu avec l'élément particulier abaissé antérieurement, p.ex. en introduisant ou en faisant coulisser les deux éléments particuliers réciproquement l'un sur ou dans l'autre et, le cas échéant, par remplissage au béton de la ligne de tubes, caractérisé par le fait qu'à la suite de la réalisation du fossé on a déposé sur le fond du fossé une couche (32) en béton immergeable, que dans la couche de béton immergeable deux rails de support (1,2) agissant comme rails de guidage pour les éléments particuliers ou pour la ligne de tubes parallèles l'un par rapport à l'autre sont ancrés à un niveau parallèle à la nivelette de la ligne de tubes, que l'on attend la prise du béton immergeable, de façon que les rails de support soient fixés, que de préférence en un endroit du fossé un élément particulier (22) est abaissé jusqu'aux rails de support pour être déplacé en glissant sur les rails de support en direction des rails de support à raison, essentiellement, d'une distance correspondant à sa longueur, et qu'ensuite un autre élément particulier est abaissé, au même endroit du fossé où a été abaissé le premier élément particulier, également sur les rails de support et est déplacé de nouveau le long des rails, en direction de l'élément particulier abaissé antérieurement, et est glissé vers l'avant solidairement avec cet autre élément particulier sur une distance correspondant à sa longueur, et que de cette manière, par dépôt et par déplacement d'éléments particuliers consécutifs, le fossé est doté d'une ligne de tubes formée par des éléments particuliers adjacents reposant sur les rails de support (1,2) et correspondant à la nivelette souhaitée.

2. Procédé selon revendication 1, caractérisé par le fait que suite au montage du dernier élément particulier sur la ligne de tubes, on réalise le remplissage de la ligne de tubes jusqu'à juste au-dessus de la nappe d'eau souterraine et que le raccordement à la ligne avoisinante séparée par un espace intermédiare est réalisé, l'eau souterraine étant enlevée de l'espace entre les lignes de tubes qu'il s'agit de relier, p.ex. au moyen d'un puits ou par pompage, et que dans la fouille ainsi vidée, on introduit une pièce de raccordement ou en érige une en béton fabriqué sur site pour la relier aux extrémités des lignes avoisinantes.

3. Dispositif pour la réalisation du procédé selon revendication 1 ou 2, avec des éléments d'ancrage (5) fixés sur les rails de guidage (1,2) et s'étendant vers le bas à partir des rails de guidage (1,2), et que les rails de guidage (1,2) étant fixés sur des éléments (4c) réalisés essentiellement en traverses et dotés de barres d'ajustage (4) dirigées vers le haut, et que des éléments de maintien (6) sont agencés en un endroit prédéfini et fixe de la longueur des barres d'ajustage (4) pour les tenir.

4. Dispositif selon revendication 3, caractérisé par le fait que les barres d'ajustage (4) présentent deux sections (4a, 4b) reliées de manière amovible l'une à l'autre, la liaison amovible des deux sections (4a, 4b) étant de préférence réalisée en tant que liaison à vis (7) ou par goupille (8), la liaison par goupille étant dotée d'au moins une goupille (9) rentrant dans l'alésage circonférentiel de l'une des sections (4b) de la barre d'ajustage, cette goupille étant logée via un levier (10) logé à son tour de manière pivotable sur la circonférence extérieure de l'une des sections d'ajustage (4a), le levier (10) étant doté d'un élément d'actionnement, p.ex. un câble de traction (11).

5. Dispositif selon revendication 3 ou 4, caractérisé par le fait que les éléments de maintien fixes (6) pour les barres d'ajustage sont agencés sur un profil raidisseur (12) du fossé ou de la cunette, ou encore sur une construction porteuse (13) superposant le fossé ou la cunette (14).

6. Dispositif selon revendication 5, caractérisé par le fait que les éléments de maintien (3) des barres d'ajustage (4) sont réalisés en tant que douilles taraudées (15) logées de façon pivotable sur le profil raidisseur (12) du fossé ou de la construction porteuse (13) superposant le fossé (13), chaque douille filetée (15) étant engagée dans un filet (16) prévu sur la barre d'ajustage.

7. Dispositif selon revendication 3, caractérisé par le fait que l'élément de maintien (8) de la barre d'ajustage (4) est réalisé en tant que levier pivotable (18) doté d'une barre d'actionnement (17), le levier étant doté d'un alésage traversé par la barre d'ajustage (4) et avec un diamètre dépassant celui de la barre d'ajustage (4), de telle sorte que la barre d'ajustage (4) est maintenue coïncée dans l'alésage.

8. Dispositif selon revendication 7, caractérisé par le fait que le levier pivotable (18) doté de l'alésage pour la barre d'ajustage (4) est logé sur un palier (20) réglable par une broche à vis (19) logée de façon orientable, mais non déplaçable dans le sens axial dans un support (21) fixe ancrable sur site dans le fossé, p.ex. sur un dispositif raidisseur du fossé (12).

9. Dispositif selon l'une des revendications 3 à 8, caractérisé par le fait qu'il est prévu pour l'avancement de chaque élément particulier (22) placé sur les rails de guidage (1, 2) une presse hydraulique (23), en particulier dotée d'un piston-chasse télescopique (24) dont l'extrémité libre (25) s'appuie sur un chariot (27) glissant sur les rails de guidage (1,2) ou sur un cadre et engagé dans la face frontale (26) de l'élément particulier (22) devant être coulissé vers l'avant, la presse (23) s'appuyant contre une cloison transversale (28) du fossé ou contre une butée fixée sur les rails de guidage (1,2).

10. Dispositif selon revendication 3, caractérisé par le fait que l'élément de maintien (3) est réalisé de manière à pouvoir maintenir la barre d'ajustage (4) au moyen d'un pignon denté (29) s'enclenchant dans une crémaillère (30) agencée sur la barre d'ajustage (4) avec fixation par cliquet et mise en rotation par le biais d'une manivelle (31).

11. Dispositif selon l'une des revendications 3 à 8 ou 10, caractérisé par le fait que pour l'avancement de l'élément particulier déposé sur les rails de guidage (1,2) on a prévu un chariot (27) déplaçable sur les rails de guidage (1,2) et s'appuyant sur la face frontale de l'élément particulier (22), ce chariot étant actionné par un câble de traction disposé sur les rails de guidage (1,2) et donc par le biais de fers d'ancrage (5) dans le béton immergeable ou par le biais d'un ancre de traction ancré dans le sol se trouvant du côté latéral de l'extrémité de la cunette.
